# EUROPEAN PATENT SPECIFICATION

(11) **EP 0 608 787 B1**
(45) Date of publication and mention of the grant of the patent: **26.03.1997**
(21) Application number: 94100899.7
(22) Date of filing: 22.01.1994
(51) Int. Cl.: H02J 3/00

(54) **Polyvalent power system**
Mehrzweckstromversorgungssystem
Système polyvalent d'alimentation

(30) Priority: 29.01.1993 ES 9300175
(43) Date of publication of application: 03.08.1994
(73) Proprietor: ALCATEL STANDARD ELECTRICA, S.A., E-28045 Madrid (ES)
(72) Inventor: Sancho Rotger, José Félix, E-28029 Madrid (ES)
(74) Representative: Pohl, Herbert, Dipl.-Ing

(56) References cited:
- EP-A- 0 069 964
- DE-A- 4 012 307
- US-A- 4 451 773
- INTELEC 87, 17 June 1987, STOCKHOLM pages 294 - 300 ANDERSSON ET AL 'a modular redundant smps system easy to expand and service'
- PCIM'88 10 December 1988, TOKYO JAPAN, pages 343 - 351 TOKIWA ET AL 'Application of a digital instantaneous current control for static induction thyristor converters in the utility line'
- IEEE, 9 August 1992 pages 359 - 364 MODEL ET AL 'A new DC power plant architecture for centralized or decentalized applications'

## Description

### OBJECT OF THE INVENTION

This invention, as stated in the title of this document, refers to a direct current power supply system configurable and adaptable to the load type and architecture employed, comprising a set of racks arranged in parallel in order to make best use of the resources, that feed a load or set of loads and batteries.

The system of the invention is particularly applicable to power supply systems working at high power levels in which it is necessary to group together subsystems of lower power levels, avoiding problems of incompatibility when their outputs are connected in parallel.

### BACKGROUND TO THE INVENTION

The evolution of power supply systems in recent years has tended to modular and configurable systems that permit them to be sized in accordance with the load to be fed, prejudicing thereby an extensive range of power supply systems for different ranges of output current, voltages, etc.

In the article "A New Power Plant Architecture for Centralized or Decentralized Applications" by M.J. Model and H.E. Gronloh published in the Proceedings of the XIV International Telecommunications Energy Conference (INTELEC), Washington, October 1992, pages 359-364, the concept of polyvalence is defined and the possible configurations are described.

To this end, one starts from a basic configuration module, called hereafter rack, to which is applied the mains. This rack is made up of a set of converter modules that transform the alternating current into direct current, providing at its output a direct current that feeds a battery or set of batteries and the load associated with this rack. The purpose of the batteries is to provide power to the load in the event of mains failure. It must also contain a control module to regulate the output voltage and/or current keeping them within the predefined nominal limits.

In order to share resources to gain in reliability and reduce costs, several racks as the above mentioned are grouped together, so that a modular power supply system is obtained that can be easily dimensioned to the requirements of the load.

These arrangements are made by connecting the rack outputs in parallel, there being two types of configuration: centralised parallel and distributed parallel. In the first type all the batteries are normally physically located together in a room for this purpose, such that all the racks contribute to supplying the load and battery in a common manner. In the second type, each battery is usually inside the actual rack with which it is associated, that also has the function of feeding its own associated load.

Nonetheless the practical implementation of these configurations offers various problems as a consequence of unbalances between loads and/or racks, producing, at least, a shortening in the useful lifetime of the batteries and equipments.

This is normally overcame, in accordance with the state of the art, by the use of balancing rods that balance the levels of current supplied by the racks, at the expense of introducing power losses, or by means of additional electronic circuitry.

### TECHNICAL PROBLEM TO BE OVERCAME

The technical problem to be overcome is to achieve control of the currents delivered by the racks, as a function of the different parameters and architecture of the system, such that the useful life of the batteries, loads, and power supply equipments is not diminished because of current overloads, temperature, etc.

### CHARACTERISATION OF THE INVENTION

To overcome the problem stated above, the system, that comprises an alternating current distributor that supplies the current coming from the mains to a number of racks which have a number of converters that convert the alternating current into direct current and which also have a battery to provide power to the load in the event of a mains failure, is based on the control of the currents supplied by each rack being concentrated in only one rack that includes a plant control module that has the function of providing overall system control, receiving all the information on state variables of the assembly and acting in consequence to establish the current that have to be supplied by each rack, including, itself, for the correct operation of the system in accordance with selected strategies.

To achieve this the system has a first multipoint communications channel that put into arrangement the control modules of each rack, by means of which each rack informs the rack responsible for the overall system control of the values of the state variables from which it performs and/or calculates some measurement, receiving also the configuration commands and the value of the current to be supplied.

Thus, in the case of centralised parallel arrangement, the object is that each active converter in the entire rack assembly should provide the same current, for which each rack is informed of the current to be supplied per converter.

In the case of distributed parallel arrangement, the object is to have zero current in the rods under normal operating conditions. To this end, each rack must supply current only to its associated battery and load, whereby the currents from the converters in any one rack shall all be equal to each other, but not necessarily equal to those of another rack.

In either case the system establishes a regulation of any of the output parameters: output voltage, output currents, etc., which is done by means of a digitally-processed intelligent feedback loop controlled by the control module of the rack responsible for the overall system control that solves the inherent stability problems of a loop with multiple driving sources by allocating ranges of values and of the state variables to be controlled, whereby a first narrow range of values is allocated to a first state variable or combination of state variables for which one of the racks acts in accordance with a fast adaptation process when said state variable is found to be outside it and in accordance with a slow adaptation process when it is inside. In like manner, a second state variable or combination of state variables with a second broader range, weighted to include the first, is allocated to the rest of the racks, which also act in accordance with a fast adaptation process when this second state variable or combination of state variables is outside it and simultaneously the first variable is inside the first range, and in accordance with a slow adaptation process in the remaining cases.

In this way an approximation to the equilibrium point takes place by means of the racks other than that responsible for system control and by regulation produced by this latter, avoiding in this way the problems of stability inherent to this kind of multiple loop.

As a consequence of this operating philosophy it is possible to carry out the control of any system configuration formed by any number of racks with centralised or distributed parallel arrangement, it also being possible to associate it with equivalent systems to constitute a hierarchy of higher order. It is also possible to have a remote terminal to perform data input for the configuration and have a display of the general state of the system, making use of a connection to a system control module that is incorporated in the rack responsible for overall system control.

### BRIEF FOOTNOTES TO THE FIGURES

A more detailed explanation of the invention can be found in the following description of the invention, based on the accompanying figures in which:
- figure 1 shows the composition of a power supply system consisting of a series of racks in distributed (a) and centralised (b) parallel arrangement, in accordance with the invention, and

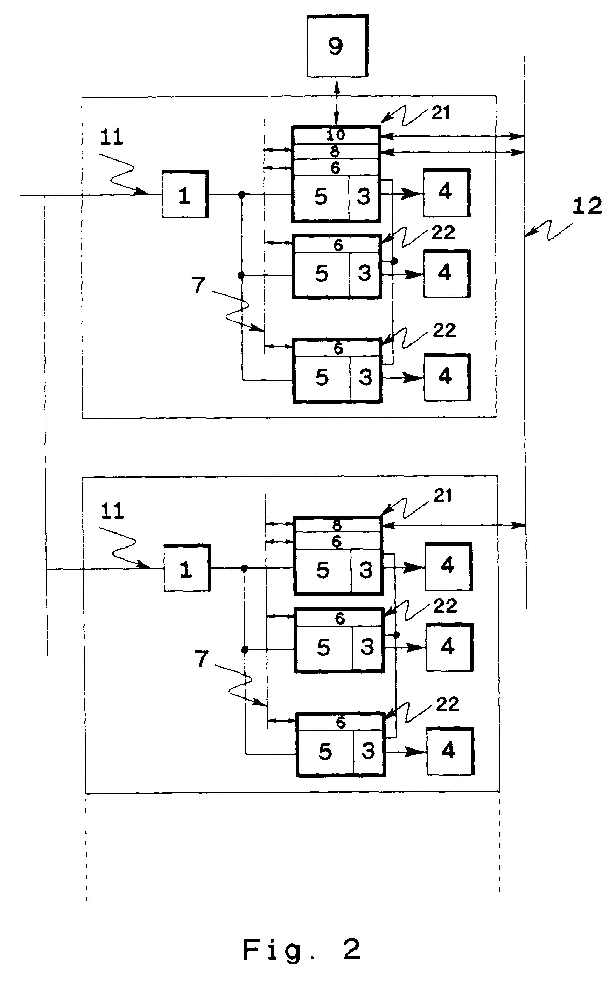

- figure 2 shows a grouping of systems like that of figure 1(a) in order to constitute a hierarchy of higher order.

### DESCRIPTION OF THE INVENTION

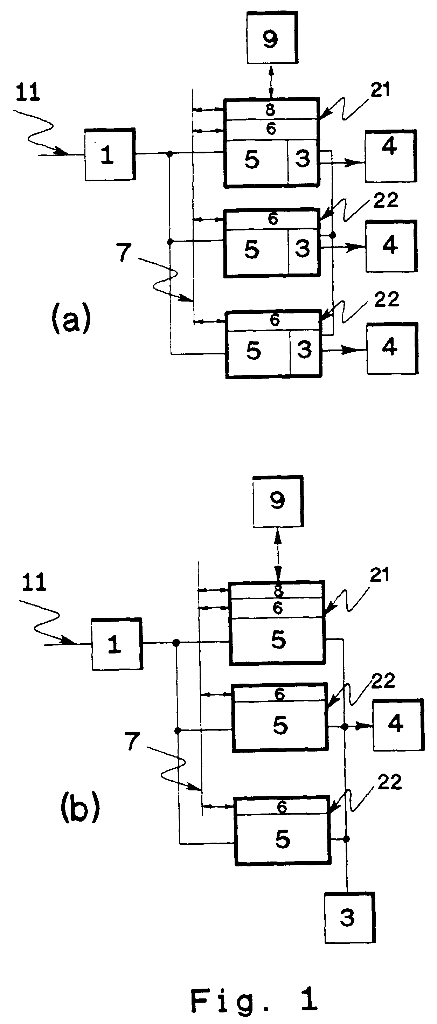

The block diagrams of figures 1(a) and 1(b) each show an architecture for a power supply system with distributed and centralised parallel arrangement respectively. In the first case, each rack consists of a control circuit 6 and converters 5 that feed a battery 3 and an associated load 4. Each rack is fed by an alternating current distributor 1 that supplies the current coming from the mains 11.

The parallel arrangement of the batteries 3 permits a total or partial failure of the supplied current from either rack 21, 22 to be taken up by the remainder until it is restored, in this way enhancing the reliability of the system. In like manner, in the case of centralised parallel arrangement, the provision of current by each converter 5 for system optimisation is the same and, in the case of failure of a converter 5, this lack of current is made up equally by the rest of the working converters.

For correct operation, all the racks 21, 22 and the loads 4 should be identical, which does not happen in practice but is achieved by making use of expensive balancing procedures.

This invention, as can be seen in figure 1, makes use of a multipoint communications channel 7 that interconnects the control modules 6 of all the racks 21, 22 with the plant control module 8 for the exchange of information between one of the racks responsible for overall system control 21 and tile rest of the racks 22 which report to it, respectively, the value of the state variables that they read and receive the command for the current to be supplied, in accordance with the criteria programmed in the plant control module 8 included in this rack responsible for overall system control 21.

In this sense, both the centralised and distributed parallel systems are equivalent except for the decision criteria of the plant control module 8, included in the rack responsible for overall system control 21.

There is also a remote terminal 9 for the display and data input to configure the system and supervise the events occurring.

The system constituted in this way performs regulation of any state variable or combination of variables as is described below for the case of balanced sharing of the total output current among the converters in a centralised parallel arrangement (figure 1(b)).

In this case, the current from all the converters 5 is the same and the total current from all the racks 21, 22 is that required by the load. If for any reason, for example a variation in the load, the total current changes, unbalances in the sharing of current by the converters are produced.

In this situation, the plant control module 8 assigns the voltage value to be maintained under regulation inside a first range to one of the racks, while it informs the rest of the racks of the new value of current to be supplied, calculated in order to produce a balance, inside a second, broader range, in such a way that the first range nests within the first in a weighted fashion.

The value of the voltage tends to be maintained constant rapidly by the rack to which it has been allocated, when this value is outside the first range described, or slowly if it is inside the first range. The rest of the racks, however, follow a slow adaptation process except when their current is outside the second allocated range and, simultaneously, the voltage is within the first range.

These values of range or tolerance windows, as well as the state variable or combination of state variables, have been selected appropriately according to the tolerance of the parameters of the racks used, such that the system is unconditionally stable and problems of multiple loops are avoided.

In the case of a distributed parallel arrangement, the control procedure is analogous.

Finally, the supply system constituted in this way can be mounted in parallel, in turn, with other similar systems that are interconnected by means of a second multipoint communications channel 12, controlled by a system control module 10, that performs the overall control of another system of greater hierarchical order that is configured and supervised by means of the same remote terminal 9, connected to said system control module 10.

## Claims

1. **POLYVALENT POWER SYSTEM** consisting of an alternating current distributor (1) that supplies the current coming from the mains (11) to a set of N racks (21, 22) with the function of converting the alternating current into direct current in order to feed an associated load (4), in which each of the N racks (21, 22) has a certain number of converters (5) and a rack control module (6) for regulating the current supplied by the certain number of converters (5), either, in the case of a distributed system each rack having a battery (3) associated with it, or in the case of a centralised system all the racks sharing the same battery (3), it being the mission of these batteries to provide power to the load (4) in the event of a mains failure and **characterised** in that one of the racks (21), that acts as the rack responsible for overall system control, holds a plant control module (8) that produces the commands related to configuration, control and supervision for all the racks (21, 22) according to the configuration of the system, load and occurrences in it, making use of a first multipoint communications channel (7) that interconnects with the rack control modules (6) of all the racks (21, 22).

2. **SYSTEM** according to claim 1, **characterised** in that it can also be associated with another set of M equivalent systems in which one of them holds a system control module (10) so that it can exercise overall control on this set of M systems in a similar way to that of the previous case, making use of a second multipoint communications channel (12), resulting thereby in the formation of a greater hierarchical order.

3. **SYSTEM** according to claim 1, **characterised** in that it can support both centralised and distributed configurations of parallel arrangement, thanks to the control exercised by the plant control module (8) included in the rack responsible for the overall system control (21), establishing the currents to be supplied by all the converters in the racks (21, 22) according to the corresponding configuration.

4. **SYSTEM** according to claim 3, **characterised** in that in the case of a centralised parallel configuration, the rack responsible for the overall system control (21), in accordance with its configuration, establishes the currents to be supplied by all the racks (21, 22) such that the nominal currents supplied by each and every activated converter (5), which belong to whatever rack (21, 22), are equal.

5. **SYSTEM** according to claim 3, **characterised** in that in the case of a distributed parallel configuration, the plant control module (8) contained in the rack responsible for the overall system control (21), and in accordance with its configuration, establishes the currents to be delivered by all the racks (21, 22) such that the nominal currents supplied by each one of them corresponds with that associated with its own load and battery in the event of a balanced situation, except when there is a failure of one of the racks or converters, in which case the lack of current to its associated load is provided by the rest of operating racks (21, 22).

6. **SYSTEM** according to claim 1, **characterised** in that the plant control module (8) included in the rack responsible for the overall system control (21) allocates a first state variables or combination of state variables with a first range of values to one rack, and also allocates a second state variable or combination of state variables, with a second range, more broadly weighted than the first, to the rest of the racks, such that:
- when the value of the first state variable or combination of state variables, regardless of the value of the second state variable, is outside the first range, the rack to which this variable has been allocated, responds to a fast regulation process,
- when the value of this first state variable or combination of state variables, is inside this first range, the rack to which it has been allocated responds to a slow adaptation process,
- when the second state variable or combination of state variables is inside the second range, the racks allocated to this second variable respond to a slow adaptation process, and
- when the second state variable or combination of state variables is outside the second range, the racks allocated to this second state variable or combination of state variables respond to a fast process if simultaneously the first state variable is inside the first range and a slow process if simultaneously the first variable is outside the first range.

7. **SYSTEM** according to claim 1, **characterised** in that it has a remote terminal (9) for the display and data input connected to the plant control module (8) included in the rack responsible for overall system control (21), that permits the configuration, control and supervision of any parameter and system status to be carried out.

8. **SYSTEM** according to claim 2, **characterised** in that in the event of systems of greater hierarchical order, the remote terminal (9) for the display and data input is connected to the system control module (10) of the rack in which it is contained permitting the configuration, control and supervision to be done for any parameter of the system of greater hierarchical order.

## Patentansprüche

1. Multivalentes Stromversorgungssystem bestehend aus einem Wechselstromverteiler (1), der den Strom liefert, der von der Hauptversorgung (11) zu einem Satz von N Gestellen (21,22) mit der Funktion des Konvertierens des Wechselstroms in Gleichstrom kommt, um eine zugehörige Last (4) zu versorgen, wobei jedes der N Gestelle (21,22) eine bestimmte Anzahl von Konvertern (5) und ein Gestellsteuermodul (6) zum Regeln des Stromes aufweist, der durch die bestimmte Anzahl von Konvertern (5) geliefert wird, wobei entweder im Fall eines Verteilungssystems jedes Gestell eine Batterie (3) aufweist, die mit ihm verbunden ist, oder im Fall eines zentralisierten Systems alle Gestelle die gleiche Batterie (3) teilen, wobei es die Aufgabe dieser Batterien ist, einen Strom der Last (4) im Falle eines Fehlers der Hauptversorgung zur Verfügung zu stellen und das dadurch gekennzeichnet ist, daß eines der Gestelle (21), das als das Gestell wirkt, das für die gesamte Systemsteuerung verantwortlich ist, ein Anlagensteuermodul (8) enthält, das die Befehle erzeugt, die die Konfiguration, die Steuerung und die Überwachung aller Gestelle (21,22) gemäß der Konfiguration des Systems, der Last und den darin auftretenden Störungen betreffen, wobei ein erster Mehrpunkt-Kommunikationskanal (7) verwendet wird, der das Gestellsteuermodul (6) aller Gestelle (21,22) verbindet.

2. System nach Anspruch 1, dadurch gekennzeichnet, daß es auch mit einem anderen Satz M äquivalenter Systeme verbunden sein kann, in welchem eines von ihnen ein Systemsteuermodul (10) enthält, so daß es eine Gesamtsteuerung für diesen Satz von M Systemen in ähnlicher Weise durchführen kann, wie bei dem vorhergehenden Fall, indem ein zweiter Mehrpunkt-Kommunikationskanal (12) verwendet wird, wodurch die Bildung einer größeren hierarchischen Ordnung resultiert.

3. System nach Anspruch 1, dadurch gekennzeichnet, daß es sowohl zentralisierte als auch verteilte Konfigurationen mit paralleler Anordnung, aufgrund der Steuerung, die durch das Anlagensteuerungsmodul (8) durchgeführt wird, versorgen kann, das in dem Gestell, das für die gesamte Systemsteuerung (21) verantwortlich ist, enthalten ist, indem die Ströme, die zu liefern sind, durch alle Konverter in den Gestellen (21,22) gemäß der entsprechenden Konfiguration festgelegt werden.

4. System nach Anspruch 3, dadurch gekennzeichnet, daß in dem Fall einer zentralisierten parallelen Konfiguration das Gestell, das für die gesamte Systemsteuerung (21) verantwortlich ist, gemäß seiner Konfiguration die Ströme festlegt, die mittels aller Gestelle (21,22) derart zu liefern sind, daß die nominellen Ströme, die durch jeden und alle aktivierten Konverter (5), die zu irgendeinem Gestell (21,22) gehören, geliefert werden, gleich sind.

5. System nach Anspruch 3, dadurch gekennzeichnet, daß in dem Fall einer verteilten parallelen Konfiguration das Anlagensteuermodul (8), das in einem Gestell enthalten ist, das für die gesamte Systemsteuerung (21) verantwortlich ist und gemäß seiner Konfiguration die Ströme festlegt, die durch alle Gestelle (21,22) derartig zu liefern sind, daß die nominalen Ströme, die durch jedes von ihnen zu liefern sind, mit denen korrespondieren, die mit seiner eigenen Last und Batterie in dem Fall des stabilen Zustandes verbunden sind, außer wenn ein Fehler eines der Gestelle oder Konverter auftritt, wobei in dem Fall der fehlende Strom für seine zugehörige Last durch den Rest der arbeitenden Gestelle (21,22) bereitgestellt wird.

6. System nach Anspruch 1, dadurch gekennzeichnet, daß das Anlagensteuermodul (8) das in dem Gestell enthalten ist, das für die gesamte Systemsteuerung (21) verantwortlich ist, eine erste Zustandsvariable oder eine Kombination von Zustandsvariablen mit einem ersten Wertebereich für ein Gestell zuteilt und auch eine zweite Zustandsvariable oder eine Kombination von Zustandsvariablen mit einem zweiten Bereich, der breiter gewichtet ist als der erste, dem Rest der Gestelle zuteilt, so daß:
- wenn der Wert der ersten Zustandsvariablen oder der Kombination von Zustandsvariablen, ohne Berücksichtigung des Wertes der zweiten Zustandsvariablen außerhalb des ersten Bereiches ist, das Gestell, dem diese Variable zugeteilt worden ist, mit einem schnellen Regelungsvorgang reagiert,
- wenn der Wert der ersten Zustandsvariablen oder die Kombination der Zustandsvariablen innerhalb des ersten Bereiches ist, das Gestell, dem sie zugeteilt worden ist, mit einem langsamen Anpassungsvorgang reagiert,
- wenn die zweite Zustandsvariable oder die Kombination von Zustandsvariablen, innerhalb des zweiten Bereiches ist, die Gestelle, die dieser zweiten Variablen zugeteilt sind, mit einem langsamen Anpassungsvorgang reagieren, und
- wenn die zweite Zustandsvariable oder die Kombination der Zustandsvariablen außerhalb des zweiten Bereiches ist, die Gestelle, die dieser zweiten Zustandsvariablen oder der Kombination der Zustandsvariablen zugeteilt sind, mit einem schnellen Vorgang reagieren, wenn gleichzeitig die erste Zustandsvariable innerhalb des ersten Bereiches ist und mit einem langsamen Vorgang reagieren, wenn gleichzeitig die erste Variable außerhalb des ersten Bereiches ist.

7. System nach Anspruch 1, dadurch gekennzeichnet, daß es ein Fernendgerat (9) für die Anzeige und Dateneingabe aufweist, das mit dem Anlagensteuermodul (8) verbunden ist, welches in dem Gestell enthalten ist, das für die gesamte Systemsteuerung (21) verantwortlich ist, die die Konfiguration, die Steuerung und die Überwachung von jedem Parameter und dem Systemzustand der auszuführen ist, zuläßt.

8. System nach Anspruch 2, dadurch gekennzeichnet, daß im Fall von Systemen größerer hierarchischer Ordnung das Fernendgerät (9) für die Anzeige und Dateneingabe mit dem Systemsteuermodul (10) des Gestells verbunden ist, in dem dieses enthalten ist, wodurch die Konfiguration, die Steuerung und die Überwachung, die für jeden Parameter des Systems der größeren hierarchischen Ordnung durchzuführen ist, zugelassen wird.

## Revendications

1. Réseau de distribution d'énergie polyvalent composé d'un dispositif de distribution de courant alternatif (1) qui fournit le courant provenant du secteur (11) à un ensemble de N bâtis (21, 22) dans le but de convertir le courant alternatif en courant continu afin d'alimenter une charge associée (4), dans lequel chacun des N bâtis (21, 22) présente un certain nombre de convertisseurs (5) et un module de commande de bati (6) permettant de réguler le courant fourni par le certain nombre de convertisseurs (5), dans le cas d'un réseau distribué, chaque bâti ayant une batterie (3) qui lui est associée ou, dans le cas d'un réseau centralisé, tous les bâtis partageant la même batterie (3), la mission de ces batteries étant de fournir de la puissance à la charge (4) en cas de panne du secteur et caractérisé en ce que l'un des bâtis (21), qui est le bâti responsable de la commande de la totalité du réseau, renferme un module de commande de l'installation (8) qui produit les commandes relatives à la configuration, à la commande et à la supervision de tous les bâtis (21, 22) selon la configuration du réseau, sa charge et ce qui s'y produit, en utilisant une première voie de communication multipoint (7) qui assure l'interconnexion avec les modules de commande de bâti (6) de tous les bâtis (21, 22).

2. Réseau selon la revendication 1, caractérisé en ce qu'il peut également être associé à un autre ensemble de M réseaux équivalents parmi lesquels l'un renferme un module de commande du réseau (10) de sorte qu'il peut effectuer une commande globale de cet ensemble de M réseaux, de la même façon que dans le cas précédent, en utilisant une deuxième voie de communication multipoint (12), ce qui entraîne l'apparition d'un ordre hiérarchique supérieur.

3. Réseau selon la revendication 1, caractérisé en ce qu'il peut supporter à la fois une configuration distribuée et une configuration centralisée ayant un agencement parallèle, grâce à la commande effectuée par le module de commande de l'installation (8) contenu dans le bâti responsable de la commande de la totalité du réseau (21), en établissant les courants devant être fournis par tous les convertisseurs des bâtis (21, 22) selon la configuration correspondante.

4. Réseau selon la revendication 3, caractérisé en ce que dans le cas d'une configuration parallèle centralisée, le bâti responsable de la commande de la totalité du réseau (21), selon sa configuration, établit les courants devant être fournis par tous les bâtis (21, 22) de sorte que les courants nominaux fournis par tous les convertisseurs activés (5), qui appartiennent à l'un quelconque des bâtis (21, 22) sont égaux.

5. Réseau selon la revendication 3, caractérisé en ce que dans le cas d'une configuration parallèle distribuée, le module de commande de l'installation (8) contenu dans le bâti responsable de la commande de la totalité du réseau (21), et selon sa configuration, établit les courants devant être fournis par tous les bâtis (21, 22) de sorte que les courants nominaux fournis par chacun d'eux correspondent à ceux qui sont associés à la charge et à la batterie de chacun dans le cas d'une situation équilibrée, sauf lorsqu il y a une panne de l'un des bâtis ou convertisseurs, et dans ce cas, le courant manquant à sa charge associée est fourni par le reste des bâtis qui fonctionnent (21, 22).

6. Réseau selon la revendication 1, caractérisé en ce que le module de commande de l'installation (8) contenu dans le bâti responsable de la commande de la totalité du réseau (21) attribue une première variable d'état ou une combinaison de variables d'état, ayant un premier éventail de valeurs, à un bâti, et attribue également une deuxième variable d'état ou une combinaison de variables d'état, ayant un deuxième éventail, pondéré plus grossièrement que le premier, aux bâtis restants, de sorte que :
- lorsque la valeur de la première variable d'état ou de la combinaison de variables d'état, quelle que soit la valeur de la deuxième variable d'état, se trouve hors du premier éventail, le bâti auquel cette variable à été attribuée répond à un procédé de régulation rapide,
- lorsque la première variable d'état ou la combinaison de variables d'état se trouve dans le premier éventail, le bâti auquel elle a été attribuée répond à un procédé de régulation lent,
- lorsque la deuxième variable d'état ou la combinaison de variables d'état se trouve dans le deuxième éventail, les bâtis attribués à cette deuxième variable répondent à un procédé de régulation lent, et
- lorsque la valeur de la deuxième variable d'état ou de la combinaison de variables d'état se trouve hors du deuxième éventail, les bâtis attribués à cette deuxième variable d'état ou combinaison de variables d'état répondent à un procédé rapide si, en même temps, la première variable d'état se trouve dans le premier éventail, et à un procédé lent si, en même temps, la première variable se trouve hors du premier éventail.

7. Réseau selon la revendication 1, caractérisé en ce qu'il présente un terminal situé à distance (9) permettant l'affichage et l'entrée des données connecté au module de commande de l'installation (8) contenu dans le bâti responsable de la commande de la totalité du réseau (21), qui permet d'effectuer la configuration, la commande et la supervision de tout paramètre et état du réseau.

8. Réseau selon la revendication 2, caractérisé en ce que dans le cas d'un réseau ayant un ordre hiérarchique supérieur, le terminal situé à distance (9) permettant l'affichage et l'entrée de données est connecté au module de commande du réseau (10) du bâti dans lequel il est contenu, ce qui permet à la configuration, la commande et la supervision d'être effectuées pour n'importe quel paramètre du réseau ayant un ordre hiérarchique supérieur.
